Europäisches Patentamt

European Patent Office

Office européen des brevets

(11) Veröffentlichungsnummer: **0 504 491 A1**

# EUROPÄISCHE PATENTANMELDUNG

(21) Anmeldenummer: **91122047.3**

(22) Anmeldetag: **21.12.91**

(51) Int. Cl.5: **G09F 9/35**

(30) Priorität: **22.03.91 DE 4109475**

(43) Veröffentlichungstag der Anmeldung:
**23.09.92 Patentblatt 92/39**

(84) Benannte Vertragsstaaten:
**CH DE FR GB LI SE**

(71) Anmelder: **ROBERT BOSCH GMBH**
**Postfach 30 02 20**
**W-7000 Stuttgart 30(DE)**

(72) Erfinder: **Büchin, Karl**
**Trabener Strasse 21**
**W-1000 Berlin 33(DE)**
Erfinder: **Schultze, Claudia**
**Forstweg 97**
**W-1000 Berlin 28(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**W-1000 Berlin 33(DE)**

(54) **An einer Wand eines Gerätegehäuses bewegbar angeordnetes Display.**

(57) 2.1 Um ein Display auch dann bequem ablesen zu können, wenn das Gerät mit dem Display in einer zum Betrachter hin ungünstigen Lage steht oder wenn Lichtreflexe das Ablesen erschweren, wurde das Display bisher entweder aus dem Gerätegehäuse herausklappbar angeordnet oder durch eine oberhalb des Displays schwenkbar angeordnete Blende geschützt. In beiden Fällen stört das herausgeklappte Display bzw. die herausgeklappte Blende.

2.2 Das erfindungsgemäße Display (13) ist um seine rechtwinklig zur Display-Ebene stehende Symmetrieachse drehbar gelagert. Außerdem kann auf dem Display ein um dessen Symmetrieachse drehbares Polarisationsfilter (30) angeordnet sein.

2.3 Eine vorteilhafte Anwendung des Displays sind Handapparate für Funktelefone oder Bedienteile für Funkgeräte.

3. In der Zeichnung ist in perspektivischer Ansicht ein Gerätegehäuse mit drehbarem Display und drehbarem Polarisationsfilter gezeigt.

Fig. 4

EP 0 504 491 A1

Die Erfindung geht von einem Display nach dem Oberbegriff des Anspruchs 1 aus.

Es ist ein derartiges Display bekannt (EP 0 258 717 A1), das, wenn das Gerät so aufgestellt ist, daß sein Display von dem Betrachter schlecht abgelesen werden kann, durch den Betrachter um eine zur Wandebene parallele Achse aus der Wand des Gerätes herausschwenkbar ist. Das bekannte Display hat den Nachteil, daß es im ausgeschwenkten Zustand aus der Gehäusewand hervorsteht und daß es nur an die Augenhöhe des jeweiligen Betrachters angepaßt werden kann, nicht dagegen an eine Situation, bei der das Gerät aus Platzgründen zum Beispiel parallel zur normalen Blickrichtung des Betrachters und seitlich neben diesem steht.

Es ist weiterhin ein Display bekannt (DE 33 45 014 A1), bei dem die bei ungünstigen Lichtverhältnissen auftretenden Lichtreflexe dadurch vermieden werden, daß oberhalb des Displays eine schwenkbare transparente Blende vorgesehen ist, die das auf das Display fallende Licht streut. Auch diese Blende hat den Nachteil, im aufgeklappten Zustand aus der Gehäusewand hervorzustehen und damit zu stören. Außerdem wird bei einer Aufstellung des Gerätes seitlich neben dem Betrachter das Ablesen des Displays durch die Blende behindert.

Der Erfindung liegt deshalb die Aufgabe zugrunde, ein Display gemäß dem Oberbegriff des Anspruchs 1 und des Nebenanspruchs 2 derart weiterzubilden, daß keine Einstellung erforderlich ist, durch die das Display aus einer Gehäusewand hervorsteht, und daß auch bei einer ungünstigen Aufstellung des Gerätes in bezug auf den Betrachter ein einwandfreies Ablesen des Displays möglich ist.

Diese Aufgabe wird bei einem Display gemäß dem Oberbegriff des Anspruchs 1 durch die im kennzeichnenden Teil dieses Anspruchs genannten Merkmale gelöst. Das erfindungsgemäße Display hat den Vorteil, daß es auch bei einer ungünstigen Aufstellung des Gerätes gut ablesbar ist, da es durch einfaches Drehen in eine zum Betrachter gerichtete günstige Lage gebracht werden kann. Die Ablesbarkeit eines Displays bezüglich störender Lichtreflexe kann nach dem Nebenanspruch 2 verbessert werden, wenn auf dem Display ein um dessen Symmetrieachse drehbares Polarisationsfilter angeordnet ist. Dann kann der Betrachter unabhängig von der Lage des Gerätes das Filter solange verstellen, bis die störenden Lichtreflexe verschwinden.

Ein bevorzugte Anwendung für das Display sind Handapparate für Funktelefone, als Handapparate ausgebildete Funktelefone und Bedienteile für Funkgeräte.

Ausführungsbeispiele der Erfindung sind in der Zeichnung anhand mehrerer Figuren dargestellt und werden im folgenden näher erläutert. Es zeigen

Fig. 1 eine perspektivische Ansicht eines Gerätegehäuses mit drehbarem Display,

Fig. 2 eine Seitenansicht eines Gerätegehäuses mit Display nach Fig. 1,

Fig. 3 einen stark vergrößerten Ausschnitt einer Einzelheit A in Fig. 2, im Schnitt,

Fig. 4 eine perspektivische Ansicht eines Gerätegehäuses mit Display und Polarisationsfilter,

Fig. 5 eine Seitenansicht des Gerätegehäuses nach Fig. 4 und

Fig. 6 eine vergrößerte Schnittansicht einer Lagerung für das Polarisationsfilter.

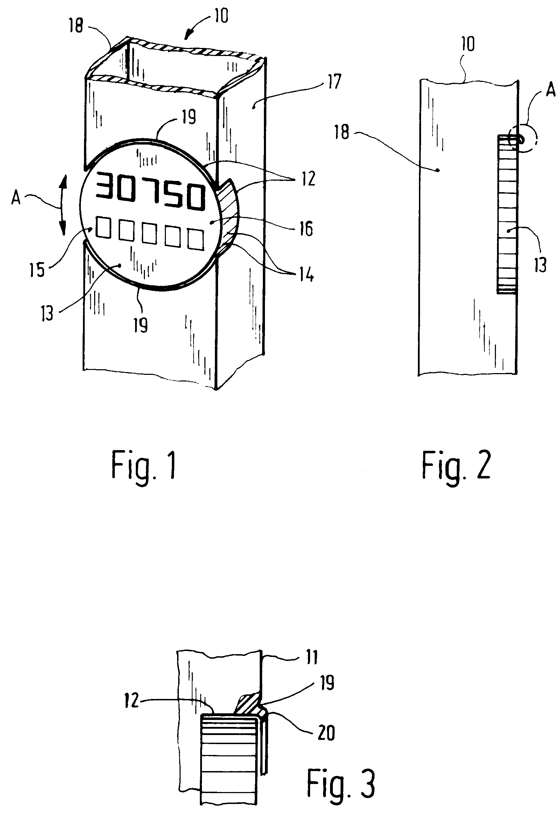

In den Fig. 1 und 2 bezeichnet 10 ein quaderförmiges Gehäuse eines elektronischen Gerätes, zum Beispiel eines Handapparates für ein Funktelefon. Das Gehäuse 10 enthält an einer Gehäusewand 11 eine runde Vertiefung 12 zur Aufnahme eines Displays 13, das die Form einer runden Scheibe hat und zum Beispiel als Flüssigkristall-Display ausgebildet ist. Der Umfang des Displays ist mit einer Rändelung 14 versehen und ragt an diametral gegenüberliegenden Bereichen 15 und 16 über die seitlichen Gehäusewände 17 und 18 etwas hinaus. Dadurch kann das Display leicht mit den Fingern einer Hand in Richtung der Pfeile A gedreht werden.

Das Display 13 ist in der Vertiefung 12 vorzugsweise dadurch drehbar gelagert, daß der die Vertiefung oben umgebende Rand 19, wie in Fig. 3 gezeigt, so verformt wird, daß ein umlaufender Kragen 20 entsteht, der das Display außen umgreift. Die elektrische Verbindung zwischen dem Display 13 und einer in dem Gehäuse 10 enthaltenen Geräteschaltung kann in dem Fachmann bekannter Weise durch ein tordierbares Kabel oder durch Schleifringe erfolgen. Dabei ist es vorteilhaft, wenn der Drehwinkel des Displays durch einen mechanischen Anschlag auf zum Beispiel ±90° gegenüber der in Fig. 1 gezeigten waagerechten Lage der Display-Zeilen beschränkt wird.

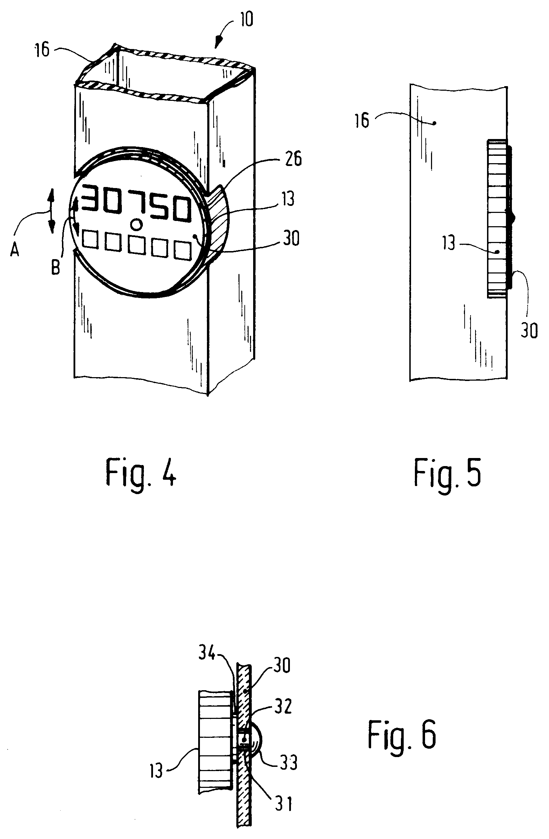

In den Fig. 4 und 5 sind gleiche Teile wie in den Fig. 1 und 2 mit gleichen Bezugszahlen versehen. Nach den Fig. 4 und 5 ist über dem Display 13 ein Polarisationsfilter 30 in Form einer kreisrunden Scheibe angeordnet. Das Polarisationsfilter ist gegenüber dem drehbaren Display 13 ebenfalls drehbar. Wenn das Gerät 10 seine gewünschte Lage auf einer Auflagefläche, zum Beispiel einem Tisch, einnimmt, wird zuerst das Display so ausgerichtet, daß es der Betrachter bequem erblicken kann. Zeigen sich dann auf dem Display Lichtreflexe, so wird das Polarisationsfilter 30 solange gedreht, bis die Reflexe nicht mehr zu sehen sind. Das Polarisationsfilter 30 kann im einfachsten Fall als loses Zubehörteil auf das Display 13 gelegt werden; es kann aber auch, wie in Fig. 6 gezeigt, eine zentrale Öffnung 31 enthalten, durch die ein Zapfen 32 eines nietförmigen Teils 33 ragt, der mit einer Scheibe 34 fest verbunden ist. Polarisationsfilter 30, Teil 33 und Scheibe 34 bilden zusammen eine Baueinheit, die auf das Display 13 zum Beispiel geklebt wird.

Das Polarisationsfilter 30 ist auf seinem Umfang vorzugsweise auch mit einer Rändelung 26 (Fig. 4) oder dergleichen versehen. Der Durchmesser des Polarisationsfilters 30 ist vorzugsweise kleiner als der Durchmesser des Displays 13, so daß das Polarisationsfilter seitlich ergriffen und gegenüber dem Display gedreht werden kann (vgl. Pfeile B in Fig. 4).

## Patentansprüche

1. An einer Wand eines Gerätegehäuses angeordnetes Display, **dadurch gekennzeichnet**, daß das Display (13) um seine rechtwinklig zur Display-Ebene stehende Symmetrieachse drehbar gelagert ist.

2. An einer Wand eines Gerätegehäuses angeordnetes Display, dadurch gekennzeichnet, daß auf dem Display (13) ein um dessen Symmetrieachse drehbares Polarisationsfilter (30) angeordnet ist.

3. Display nach Anspruch 1 oder 2, dadurch gekennzeichnet, daß bei einem runden Display (13) der Durchmesser des Polarisationsfilters (30) größer oder kleiner ist als der Durchmesser des Displays.

4. Display nach Anspruch 1, dadurch gekennzeichnet, daß das Display (13) in einer seiner Außenform angepaßten Vertiefung (12) des Gerätegehäuses (10) gelagert ist.

5. Display nach Anspruch 1 oder 3, dadurch gekennzeichnet, daß das Display (13) über mindestens eine winklig zur Ebene des Displays stehende Wand (16) des Gerätegehäuses (10) etwas hinausragt.

6. Display nach einem der Ansprüche 1 bis 5 dadurch gekennzeichnet, daß das Display (13) oder das Display und das Polarisationsfilter (30) an ihren Umfängen eine Rändelung (14, 26) aufweisen.

7. Display nach Anspruch 4, dadurch gekennzeichnet, daß der obere Rand der Vertiefung (12) des Gerätegehäuses (10) derart verformt ist, daß ein den oberen Rand des Displays (13) umgreifender Kragen (20) entsteht.

8. Display nach einem der Ansprüche 1 bis 7, dadurch gekennzeichnet, daß das Display (13) und das Polarisationsfilter (30) Bestandteil eines Handapparategehäuses für ein Mobiltelefon sind.

Fig. 1

Fig. 2

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 100 949 (METRAWATT GMBH) <br> * Zusammenfassung; Abbildung 1 * <br> --- | 1,2 | G09F9/35 |
| A | GB-A-2 216 703 (NEC CORP.) <br> * Zusammenfassung; Abbildung 2 * <br> --- | 1,2 | |
| D,A | EP-A-0 258 717 (SIEMENS AG) <br> * Zusammenfassung; Abbildung 1 * <br> --- | 1,2 | |
| A | WO-A-8 403 778 (ROBERT BOSCH GMBH) <br> * Anspruch 1; Abbildung 1 * <br> --- | 1,2 | |
| D,A | DE-A-3 345 014 (STANDARD ELEKTRIK LORENZ AG) <br> * Zusammenfassung; Abbildung * <br> ----- | 1,2 | |

**RECHERCHIERTE SACHGEBIETE (Int. Cl.5)**

G09F
G01D
H04M
G02F

Der vorliegende Recherchenbericht wurde für alle Patentansprüche erstellt

| Recherchenort | Abschlußdatum der Recherche | Prüfer |
|---|---|---|
| BERLIN | 30 APRIL 1992 | P.TAYLOR |